# EUROPÄISCHE PATENTSCHRIFT

(11) **EP 0 971 530 B1**
(45) Veröffentlichungstag und Bekanntmachung des Hinweises auf die Patenterteilung: **17.12.2003**
(21) Anmeldenummer: 99113136.8
(22) Anmeldetag: 07.07.1999
(51) Int. Cl.: H04N 1/195

(54) **Fotoplott-Verfahren zur hochenergetischen Aufzeichnung eines computergespeicherten Rasterbildes auf einen lichtempfindlichen Aufzeichnungsträger**
Photoplotting method for high-energy recording of a computer stored raster image on a light sensitive recording medium
Procédé de phototraçage pour l'enregistrement à haute énergie d'une image à trame stockée dans un ordinateur sur un support d'enregistrement photosensible

(30) Priorität: 10.07.1998 DE 19830896
(43) Veröffentlichungstag der Anmeldung: 12.01.2000
(73) Patentinhaber: MIVATEC Hard- und Software GmbH, 71101 Schönaich (DE)
(72) Erfinder: Pagan, Robin, 70563 Stuttgart (DE)
(74) Vertreter: Blutke, Klaus Wilhelm, Dipl.-Ing.

(56) Entgegenhaltungen:
- EP-A- 0 739 125
- US-A- 4 087 173
- US-A- 4 374 618
- US-A- 5 049 901

## Beschreibung

Die Erfindung bezieht sich auf ein Fotoplott-Verfahren zur hochenergetischen Aufzeichnung eines computergespeicherten Rasterbildes auf einen lichtempfindlichen Aufzeichnungsträger.

Fotoplottverfahren und -Anordnungen dienen z.B. zur Herstellung fotografischer Vorlagen für gedruckte Leiterplatten.

In der US Patentschrift 4087173 ist ein Verfahren beschrieben, bei dem ein bewegter Bildträger( Dokument) an einem feststehenden Schlitz optisch abgatastet wird.
Das abgetastete Bild wird mittels einer verschiebbaren Linse auf einem feststehenden Film aufgezeichnet. Dadurch werden aufeianderfolgende abgetastete "Spaltenbilder" auf dem Film nebeneinander zu einem Feld zusammengesetzt.

In der US Patentschrift 504 99 01 ist ein Aufzeichnungsystem mit folgenden Komponenten beschrieben:
einem festen Lichtmodulator, welcher nur Teile (einige Spalten) der Bildinformation für ein aufzuzeichnendes Feld speichert, einer festen Linse und einem bewegten Aufzeichnungsträger.

Nach dem Stand der Technik (Informationsblatt "Xenon-Plotter" der Firma MIVATEC Hard- und Software GmbH, Benzstr. 17, D-71171 Schönaich vom 15.10.1996) sind Fotoplotter bekannt, die ein computergespeichertes Rasterbild auf einen ebenen lichtempfindlichen Aufzeichnungsträger aufzeichnen.

Bei dieser Aufzeichnung wird ein sogenannter Belichtungskopf ( mit einer Aufzeichnungsfläche von ca. 5x7,5 mm) über einen relativ zu ihm großflächigen Aufzeichnungsträger ( bis ca. 720x600 mm) zur Aufzeichnung von Bildelementen geführt, aus denen das Aufzeichnungsträger-Rasterbild zusammengesetzt ist.

Im Belichtungskopf ist eine sogenannte LCD-Matrix lichtsteuernder Elemente vorgesehen ( LCD: liquid crystal device = Flüssig-Kristall-Elemente, von denen jedes selektiv elektrisch angesteuert werden kann, um es für Durchlicht zu öffnen oder zu sperren).

Wird diese LCD-Matrix mit Durchlicht beaufschlagt, so kann dieses die Matrix nur an den Elementen als "Lichtstrahl" passieren, die auf Durchlaß gesteuert sind.

Die durchgelassenen Lichtstrahlen erzeugen auf dem lichtempfindlichen Aufzeichnungsträger jeweils ein Bildelement. Fehlende Lichtstrahlen- gleichbedeutend mit gesperrten Elementen- "erzeugen" "fehlende Bildelemte.

Das Aufzeichnungsbild besteht aus einer Vielzahl von Bildelementen, aufgezeichnete und nicht aufgezeichnete (fehlende) eingeschlossen.

In der vorstehend genannten Anordnung wird die LCD-Matrix mit dem Licht einer Xenon-Blitzlampe beaufschlagt.

Da der die LCD-Matrix enthaltende Belichtungskopf eine ungleich kleinere Fläche ( zu vergleichen mit dem Feld eines Schachbrettes) als der Aufzeichnungsträger ( zu vergleichen mit einem Schachbrett mit vielen Feldern ) hat, muß dieser Belichtungskopf nacheinander auf alle Schachbrett-Feld-Positionen geführt werden, damit dort die Bildelemente aufgezeichnet werden können.

Die Bewegung des Belichtungskopfes stellt bei einem erstrebten hohen Auflösungsvermögen ( im Bereich von 10 mikrometer) des Aufzeichnungsträger-Rasterbildes höchste Toleränzanforderungen an die Präzision der Bewegungsmechanik zur Verschiebung des Kopfes.

Da der Belichtungskopf kontinuierlich über den Aufzeichnungsträger bewegt wird, verbleibt jeweils nur ein ganz kleiner Moment, um den auf ein "Schachbrettfeld" des Aufzeichnungsträgers ausgerichteten Kopf ( durch einen Xenon-Bitz) zu belichten. Eine längere Belichtungszeit würde durch die anhaltende Kopfbewegung zu verwischten Bildelementen ( mit "Kometenschweifen") führen, wodurch das Auflösungsvermögen der Aufzeichnung nachteilig beeinflußt wäre.

Kurze Belichtungszeiten sind jedoch mit geringer Aufzeichnungsenergie verbunden, was wiederum bedingt, daß nur fotografische Vorlagen, z.B. für eine nachfolgende Leiterplattenfertigung, erstellt werden können. Mit einer derartigen vergleichsweise geringen Aufzeichnungsenergie ist die Direkt-Belichtung von sogenanntem Leiterplatten-Photo-Resist-Material nicht möglich.

Es ist deshalb Aufgabe der Erfindung, ein Verfahren mit einer ungleich höheren Aufzeichnungsenergie anzugeben, welches ebenfalls von einem kontinuierlich bewegten Belichtungskopf Gebrauch macht. Die Aufzeichnungsenergie soll so hoch sein, daß eine Direktbelichtung von Photo-Resist-Material möglich ist.

Es ist weiterhin Aufgabe der Erfindung, ein Fotoplottverfahren anzugeben, welches die Aufzeichnung eines Aufzeichnungsträger-Rasterbildes mit veränderbarem Abbildungsmaßstab gestattet.

Diese Aufgaben der Erfindung werden in in vorteilhafterweise durch die in dem Anspruch 1 genannten Merkmale gelöst.

Vorteilhafte Weiterbildungen der Erfindung sind in den Unteransprüchen gekennzeichnet.

Prinzipdarstellungen der Erfindung sind in den Zeichnungen dargestellt und werden im folgenden näher beschrieben. Es zeigen :
FIG. 1 eine schematische Darstellung des erfindungsgemäßen Verfahrens;
FIG. 2a, 2b und 2c schematische Darstellungen des erfindungsgemäßen Vefahrens zu unterschiedlichen Zeitpunkten;
FIG. 3 eine Prinzipdarstellung für die maximale Belichtungszeitdauer der Aufzeichnung einer Aufzeichnungsträger-Rasterbild-Teilfläche.

Das computergespeicherte Rasterbild ist in gedachte matrixartig angeordnete Computer-Rasterbild-Teilflächen aufgeteilt; jede Teilfläche weist matrixartig angeordnete Rasterpunkt-positionen auf.

Jede Rasterpunkt-Position versteht sich als Speicherzelle mit binärem Status (Informationsgehalt): "an" oder "aus".

Das computergespeicherte Rasterbild setzt sich bildlich interpretiert aus Rasterpunkten zusammen, die einen "an"- oder "aus"-Status aufweisen.

Das Rastermaß, der gedachte Abstand zweier benachbarter Rasterpunkte ist vorgegebenen.

Durch des Rasterbild können Strukturen wiedergegeben werden, z.B. der Verlauf von Leiterbahnen auf gedruckten Leiterplatten.

Derartige Leiterbahnen werden computerprogrammgesteuert berechnet und als Rasterbild in einem Computer gespeichert: dieses wird computerprogrammgesteuert auf einen lichtempfindlichen Aufzeichnungsträger aufgezeichnet.

Das aufgezeichnete Rasterbild (Aufzeichnungsträger-Rasterbild) setzt sich aus kleinsten "Druckpunkten" zusammen.

Das Aufzeichnungsträger-Rasterbild ist in gedachte matrixartig angeordnete Aufzeichnungsträger-Rasterbild-Teilflächen aufgeteilt; diese Teilflächen weisen jeweils matrixartig angeordnete Bildelement-Positionen auf.

Computer-Rasterbild-Teilflächen und Aufzeichnungsträger-Rasterbild-Teilflächen sowie Rasterpunkt-Positionen und Bildelement- Positionen sind einander zugeordnet.

Durch den Belichtungskopf werden pro Aufzeichnungsträger-Rasterbild-Teilfläche gleichzeitig die Bildelemente aufgezeichnet, die den Rasterpunkt-Positionen der entsprechenden Computer-Rasterbild-Teilfläche entsprechen.

Die Gesamt- Aufzeichnung esetzt sich aus der aufeinanderfolgende Aufzeichnung aller Aufzeichnungsträger-Rasterbild-Teilflächen zusammen.

Bei der eingangs erwähnten LCD-Matrix, z.B. vom Typ LDK 036 T-20 AM-LCD 2,8 inch der Firma FLAT PANEL DISPLAY COMPANY, Eindhoven/ Holland, kann jedes lichtsteuernde Element selektiv elektrisch derart angesteuert werden ( entsprechend dem Binär-Status der Rasterpunkt-Position der der LCD-Matrix jeweils zugeordneten Computer-Rasterbild-Teilfläche), daß es für Durchlicht durchlässig oder undurchlässig wird.

Verfeinerte Steuerungen ermöglichen es, den Durchlässigkeitsgrad für (Durch)-Licht zu variieren.

Handelsübliche Flüssigkristall-Matrixen haben eine Anzahl von 640x480 bis 1024x768 lichtsteuernden Elementen, sie könnenfür Licht in den Wellenbereichen von 380 bis 700 nm (Nanometer)) verwendet werden. Sie sind in Diagonal-Abmessungen von 2,8 Zoll bis 5,8 Zoll verfügbar. (1 Zoll= 2,4 cm).

Die mit Durchlicht arbeitenden LCD-Matrixen können durch andere Einrichtungen ersetzt werden, z.B. durch sogenannte Kippspiegel-Elemente-Halbleiter-Chips (digital light processing devices oder digital mirror devices der Firma Texas Instruments, bei denen basierend auf Halbleiter-Technologie matrixartig angeordnete elektrostatisch steuerbare Kippspiegelelemente in zwei unterschiedliche Kippstellungen (+, - 10 ) gebracht werden können.
Anordnungen dieser Art arbeiten mit Auflicht, das per Spiegelelement in zwei unterschiedliche Richtungen reflektiert wird. Pro Spiegel ist die Aufzeichnung eines Bildelementes in einer Aufzeichnungsträger-Rasterbild-Teilfläche möglich. Handelsübliche Kippspiegelelemenete-Halbleiter-Chips weisen bei einer Fläche von z.B. 13,6 mm hoch 2 und bei einem Abstand der Kippspiegeletemenete von 17 mikrometer eine äußerst hohe Dichte von Kippspiegel-Elemeneten (800x600 Stück) auf.

Ebenso ist es auch möglich, anstelle der LCD-Matrix oder der Kippspiegel-Elemente-Halbleiter-Chips auch andere bekannte - allgemein als Lichtmodulatoren bezeichnete - Anordnungen zu verwenden, z.B. solche, die nach magneto-optischen oder ferroelektrischen Prinzipien arbeiten.

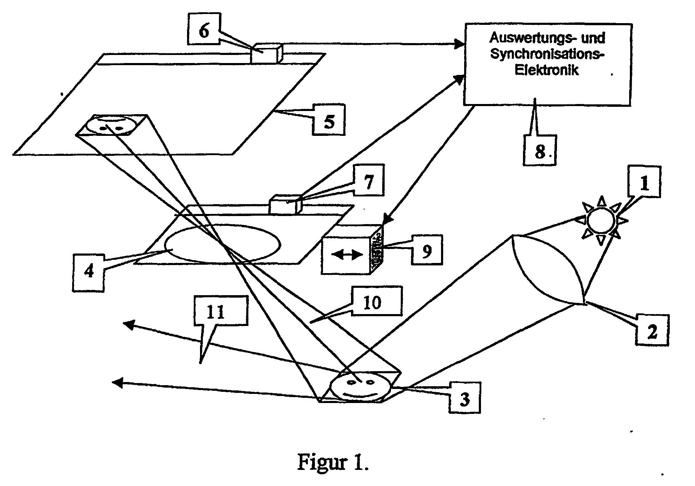

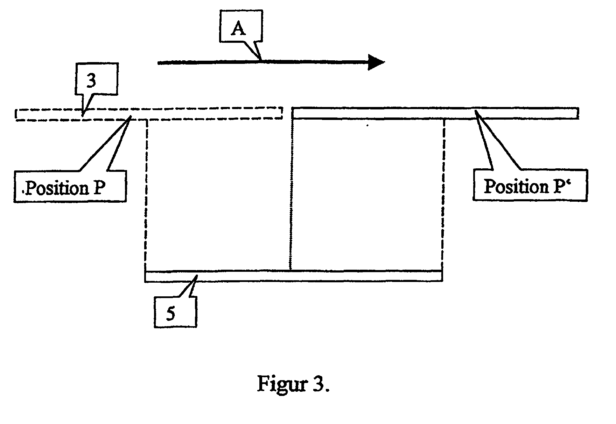

FIG. 1 zeigt eine schematische Darstellung des erfindungsgemäßen Verfahrens. Das Licht einer (größflächigen) Lichtquelle 1, z.B. einer Quecksilber-Hochdrucklampe, wird über eine Kondensor-Linse 2 als Auflicht einem Kippspiegel-Elemente-Halbleiter-Chip 3 zugeführt, welcher über eine nicht dargestellte Verbindung mit dem Computer verbunden ist, in welchem des Computer-Rasterbild gespeichert ist. Der Chip 3 erhält computerprogrammgesteuert die zur Aufzeichnung einer Aufzeichnungsträger-Rasterbild-Teilfläche erforderlichen Informationen von der dieser zugeordneten Computer-Rasterbild-Teilfläche. Der Chip ist Teil des Belichtungskopfes, welcher auch die Lichtquelle mit umfaßt. Der Belichtungskopf und der Aufzeichnungsträger 5 werden kontinuierlich retativ gegeneinander bewegt. Der Aufzeichnungsträger 5 ist in gedachte matrixförmig angeordnete Aufzeichnungsträger-Rasterbild-Teitflächen aufgeteilt.
FIG. 1 zeigt wie gerade die Teilfläche mit der "Gesichtsdarstellung" aufgezeichnet wird. Das für die Aufzeichnung maßgebende Lichtbündel ist mit 10 gekennzeichnet. Es passiert die Abbildungslinse 4, welche während der Belichtung scheinbar entgegengesetzt zur Bewegungsrichtung des Belichtungskopfes bzw. des Aufzeichnungsträgers 5 parallel zum Aufzeichnungsträger bewegt wird. Scheinbar entgegengesetzt bedeutet -auch an nachfolgenden Stellen-, daß z.B. bei einer Betrachterposition vom bewegten Belichtungskopf aus die in die gleiche Richtung aber mit geringerer Geschwindigkeit bewegte Linse hinter dem Belichtungskopf zurückbleibt.
Dadurch wird verhindert, daß die Aufzeichnung eines Bildelementes (Punktes) während der anhaltenden Belichtung bei bewegten Chip 3 bzw. bei bewegtem Aufzeichnungsträger zur Aufzeichnung eines Striches (Punkt mit "Kometenschweif") ausartet. Durch die entsprechend synchronisierten scheinbare Gegen- Bewegung der Abbildungslinse wird das Auslenken eines Lichtstrahles (bedingt durch die Relativbewegung zwischen Chip und Aufzeichnungstzräger) kompensiert. Auf diese Art und Weise kann mit "Dauerlicht" eine ungleich energiereichere Aufzeichnung ( 5000 fach und mehr) erzeugt werden als dies im Blitzbetrieb nach dem genannten Stand der Technik möglich ist.
Nach den Gesetzen der geometrischen Optik erfolgt die Abbildung stets durch die Mitte des optischen Systemes.
Nach einer Relativverschiebung (zwischen Chip und Aufzeichnungsträger), die in etwa der Hälfte der Aufzeichnungsträger-Rasterbild-Teilfläche entspricht, wird der Chip (Lichtmodulator) dunkelgeschaltet und die Abbildungslinse für die nachfolgende eue Aufzeichnungsträger-Rasterbild-Teilfläche in eine relative Ausgangsposition zurückgesetzt. Bei Erreichen der neuen Teilfläche wird der Chip mit neuer Information aktiviert und die Abbildungslinse wieder gegenläufig verschoben. Eine diesbezügliche detailliertere Darstellung ist in Zusammenhang mit FIG. 3 gegeben.
Nach Aufzeichnung der Aufzeichnungsträger-Rasterbild-Teilflächen einer ganzen Reihe folgt die der nächsten in entgegengesetzter Zeilenrichtung bis schließlich die gesamte Aufzeichnungsträger-Fläche erfaßt ist.Die Aufzeichnung jeder Teilfläche ist mit einer jeweiligen kompensierenden gegenläufigen Bewegung der Abbildungslinse verbunden. Für jede neue Teilfläche muß die Abbildungslinse in ihre relative Ausgangsposition zur neuen Teilfläche zurückgesetzt werden.Durch das geringe Linsengewicht (wenige Gramm) ist ein solches Rücksetzen leicht, z.B. durch Piezokristall-Bewegungssteuerung ("Nanomotor" der Firma Nanomotion Inc., Israel) zu realisieren.
Bei der Aufzeichnung einer Aufzeichnungsträger-Rasterbild-Teilfläche wird deren Position (sofern der Aufzeichnungsträger gegenüber dem Kippspiegel-Elemente-Halbleiter-Chip bewegt wird) durch einen Positionswandler 6 (z.B. eine im Handel verfügbare lineare Codiereinrichtung) erfaßt und an eine Auswertungs- und Synchronisations-Elektronik-Schaltung 8 gemeldet. Diese Einheit 8 erhält ebenfalls Signale eines Positionswandlers 7, welcher der Positionserfassung der Abbildungslinse 4 dient. Diese Informationen werden für die Steuerung der Präzisionsverschiebung 9 der Abbildungslinse benötigt.
Wenn keiner der Spiegel des Chips 3 aktiviert ist,wird das auftreffende Licht in Richtung 11 reflektiert und kann weder die Abbildungslinse 4 noch den Aufzeichnungsträger 5 erreichen. Nur ein aktivierter Spiegel reflektiert Licht durch die Abbildungslinse für die Aufzeichnung eines Bildelements. Die Treiberschaltung für den Chip 3 ist bekannt und im Handel verfügbar, da derartige Chips als bilderzeugende Elemente von Videoprojektoren eingesetzt werden, welche direkt an eine Computergraphikkarte angeschlossen werden können (z.B. Datenprojektor NEC Multisync LT 80 der Firma NEC).

Das erfindungsgemäße Verfahren erfordert eine exakte Synchronisation der Relativbewegung zwischen Aufzeichnungsträger 5 und Abbildungslinse 4 (bei -Fall 1-stillstehendem Chip) oder der Rela.tivbewegung zwischen Chip und Abbildungslinse 4 bei stillstehendem Aufzeichnungsträger 5 (nicht dargestellt) -Fall 2-. Die Synchronisationssteuerung erfolgt über die Steuerelektronik 8 basierend auf den Signalen der Positionsgeber 6 und 7 im Fall 1.
Im Fall 2 müßte die Abbildungslinse und der bewegte Chip jeweils mit einem Positionsgeber versehen sein.

Die Steuerelektronik berücksichtigt die notwendigerweise unterschiedlichen Laufgeschwindigkeiten der relativen Bewegung zueinander. Sie ermittelt notwendige Korrekturbewegungen und - Geschwindigkeiten um eine stabile Abbildung des Lichtmodulationssystemes auf dem Aufzeichnungsträger zu gewährleisten. Um eine ausreichende Auflösung zu erreichen, können hochauflösende Positioniersysteme mit Auflösungen von 100 Nanometer eingesetzt werden. Bei den beipielsweise mit einer Taktfrequenz von 40 Kilohertz arbeitenden Nanomotoren ergibt sich nach jeweils 4 mikrometer Hauptbewegung (in Abhängigkeit vom Abbildungsmaßstab) eine Korrekturmöglichkeit für die Geschwindigkeit der relativen Verschiebung zueinander.

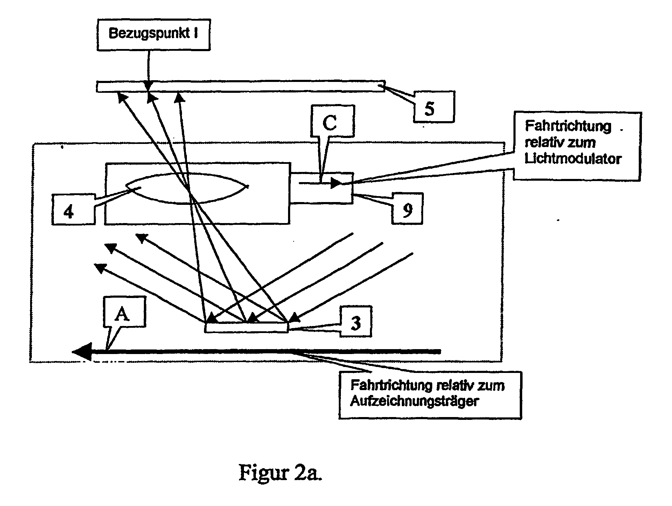

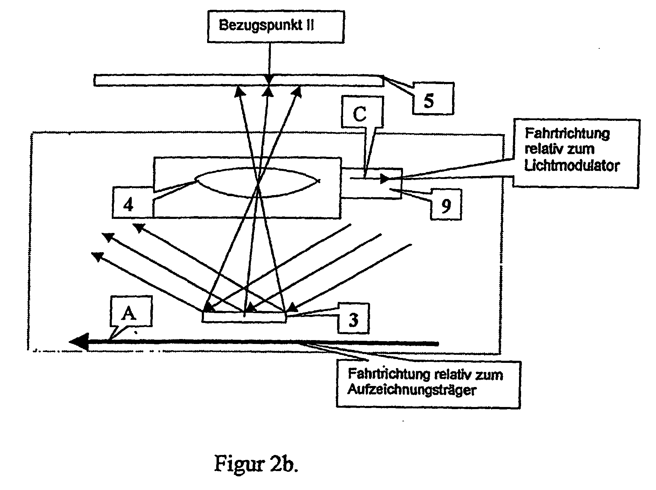

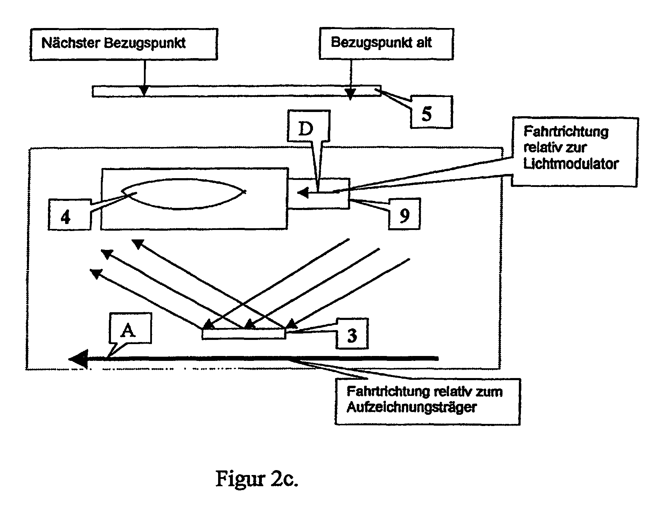

In FIG. 2 a, 2b und 2c ist in jeweils einer schematischen Darstellung die Aufzeichnung zu unterschiedlichen Zeitpunkten dargestellt:
FIG. 2a bezieht sich auf die auf einen Bezugspunkt I bezogene Aufzeichnung, FIG. 2b auf die auf einen Bezugspunkt II der gleichen Aufzeichnungsträger-Rasterbild-Teilfläche bezogene Aufzeichnung.
FIG. 2c bezieht sich auf das Rücksetzen der Abbildungslinse für eine Aufzeichnung der nachfolgenden Aufzeichnungsträger-Rasterbild-Teilfläche.
In den Darstellungen der FIG: 2a, 2b und 2c wird der Aufzeichnungsträger 5 gegenüber dem Chip in Richtung des stark ausgezogenen Pfeiles A kontinuierlich bewegt. Die Abbildungslinse 4 wird durch das Verschiebeelement 9 bei der Aufzeichnung einer Aufzeichnungsträger-Rasterbild-Teilfläche scheinbar entgegengesetzt zur Bewegungsrichtung A in Richtung C verschoben (FIG. 2a und 2b).
Nach der Aufzeichnung einer Aufzeichnungsträger-Rasterbild-Teilfläche erfolgt gemäß FIG. 2c durch das Verschiebeelement 9 ein Rücksetzen der Abbildungslinse in Richtung D (gleiche Richtung wie Richtung A) in eine relative Ausgangsposition zur nachfolgend aufzuzeichnenden Aufzeichnungsträger-Rasterbild-Teilfläche.
FIG. 2a bezieht sich auf eine auf den Bezugspunkt I bezogene Aufzeichnung, während sich FIG. 2b auf eine auf den Bezugspunkt II bezogene Aufzeichnung der gleichen Aufzeichnungsträger-Rasterbild-Teilfläche bezieht. Während dieses Zeitintervalls wird die Abbildungslinse scheinbar entgegengesetzt (in Richtung C) zur Richtung A verschoben, welche die Relativverschiebung zwischen Kippspiegel-Element- Halbleiter-Chip und Aufzeichnungsträger angibt. Nach erfolgter Aufzeichnung dieser Aufzeichnungsträger-Rasterbild-Teilfläche wird die Aufzeichnung der nachfolgenden Aufzeichnungsträger-Rasterbild-Teilfläche dadurch vorbereitet, daß die Abbildungslinse gemäß FIG. 2c in Richtung D (parallel zur Richtung A) zurückgesetzt wird, um für die neue Aufzeichnungsträger-Rasterbild-Teilfläche in eine relative Ausgangsposition zu gelangen, von der aus sie wieder scheinbar entgegengesetzt zu Richtung A verschoben wird.

Wenn die Verschiebungsgeschwindigkeit der Abbildungslinse während der Aufzeichnungsphase einer Aufzeichnungsträger-Rasterbild-Teilfläche derart mit der Bewegung des Aufzeichnungsträgers 5 synchronisiert wird, daß die Abbildung des Datenmusters stationär zum Aufzeichnungsträger 5 erscheint, tritt keine Unschärfe der Abbildung aufgrund der Bewegung des Aufzeichnungszträgers auf.

Wenn beispielsweise die Abbildungslinse den Abbildungsmaßstab der Aufzeichnung auf die Hälfte reduziert und wenn der Abstand der "deformierbaren" Kippspiegelelemnete 0,017 mm beträgt, soll in einer Ausführungsform der Erfindung die Ausschaltung des Lichtmodulators jedesmal spätestens auftrerten, wenn der Aufzeichnungsträger um die Hälfte von 800x 0,017 mm bewegt wird ( bei einer Anzahl von 800 Kippspiegelelementen in einer Reihe des Lichtmodulators). Dies wird dadurch erzielt, daß die Impulse des Positionswandlers 7 dazu benutzt werden, um die Positionierung der Abbildungslinse 4 von Aufzeichnungsträger-Rasterbild-Teilfläche zu Aufzeichnungsträger-Rasterbild-Teilfläche zu steuern. Nach dem jeweiligen Rücksetzen der Abbildungslinse in einer Ausgangsposition für eine neue Aufzeichnungsträger-Rasterbild-Teilfläche wird der Lichtmodulator erneut aktiviert. Die Steuerelektronik 8 steuert dann die Verschiebung der Abbildungslinse während der Aufzeichnung in einer Aufzeichnungsträger-Rasterbild-Teilfläche.

Es sei darauf hingewiesen, daß es ebenso möglich ist, anstelle eines relativ zum Lichtmodulator bewegten Aufzeichnungsträgers diesen unter Verwendung eines sich bewegenden Spiegels zum Abtasten des Aufzeichnungsträgers feststehend vorzusehen. In diesem Fall wird der Positionswandler 6 anstelle am Aufzeichnungsträger am sich bewegenden Spiegel befestigt.

Es sei bemerkt, daß die Erfindung nicht auf die Verwendung von Hableiter-Kippspiegel-Elernenten -Chips als Lichtmodulator beschränkt ist. So können beispielsweise auch andere Lichtmodulatoren wie zweidimensionale Flüssigkristallanordnungen, zweidimensionale magnetooptische oder ferroelektrische oder sonstige Lichtmodulatoren verwendet werden.

Ebenso kann auch bekanntes lichtempfindliches flüssiges Aufzeichnungsmaterial verwendet werden, das an belichteten Stellen aushärtet. Auf diese Weise können schichtweise quasi dreidimensionale Formen erzeugt werden.

Es sei weiterhin darauf hingewiesen, daß die Erfindung nicht auf ebene Aufzeichnungsträger beschränkt ist. Es ist möglich, auch einen auf einer drehbaren Trommel aufgebrachten Aufzeichnungsträger zu verwenden und die Trommel vor der Abbildungslinse zu drehen.

FIG 3 zeigt eine Prinzipdarstellung für die Belichtungszeitdauer einer Aufzeichnung der Bildelemente einer Aufzeichnungsträger-Rasterbild-Teilfläche. Aufzeichnungsträger5 und Lichtmodulator 3 werden relativ gegeneinander in Pfeilrichtung A verschoben. In gestrichelter Position P schiebt sich der Lichtmodulator 3 gerade mit der ersten Hälfte seiner Fläche über die Aufzeichnungsträger-Rasterbild-Teilfläche. Von diesem Moment an kann theoretisch die Dauerbelichtung erfolgen bis sich der Lichtmodulator soweit bewegt hat (ausgezogene Position P'), daß nur noch seine zweite Hälfte über der Aufzeichnungsträger-Rasterbild-Teilfläche liegt. Während dieser Zeit wird die Abbildung durch die entsprechende Verschiebung der nicht dargestellten Linse kompensiert, damit sich keine verwischte Aufzeichnung ergibt. Diese Maximalzeit der Dauerbelichtung verringert sich um die Zeit, welche für das Zurücksetzen der Linse vor der Aufzeichnung der nachfolgenden Aufzeichnungsträger-Rasterbild-Teilfläche erforderlich ist.
Die Abbildungslinse 4 bestimmt neben ihrer eine Dauerbelichtung ermöglichenden Funktion auch den Abbildungsmaßstab der Aufzeichnung.

## Patentansprüche

1. Verfahren zur Aufzeichnung eines Rasterbildes auf einen lichtempfindlichen Aufzeichnungsträger, bei dem ein computergespeichertes aus Rasterpunkten bestehendes Rasterbild mittels eines Lichtmodulators in steuerbare rasterpunktbezogene Lichtstrahlen umgesetzt wird,
durch die auf dem Aufzeichnungsträger den Rasterpunkten entsprechende Bildelemente aufgezeichnet werden,
wobei das Computer-Rasterbild matrixförmig in gedachte Computer-Rasterbild-Teilflächen aufgeteilt wird,
das Aufzeichnungsträger-Rasterbild matrixförmig in gedachte Aufzeichnungsträger-Rasterbild-Teilflächen aufgeteilt wird,
die Teilflächen des Computer- und des Aufzeichnungsträger-Rasterbildes einander zugeordnet werden,
die Computer-Rasterbild-Teilflächen matrixförmig in gedachte n Rasterpunkt-Positionen und
die Aufzeichnungsträger-Rasterbild-Teilflächen matrixförmig in gedachte n Bildelement-Positionen aufgeteilt werden,
die Bildelement-Positionen den Rasterpunkt-Positionen zugeordnet werden,
die Aufzeichnung der den Rasterpunkten entsprechenden Bildelemente einer Aufzeichnungsträger-Rasterbild-Teilfläche gleichzeitig erfolgt,
und die Aufzeichnung der Aufzeichnungsträger-Rasterbild-Teilflächen nacheinander erfolgt,
und bei dem der Lichtmodulator relativ zum Aufzeichnungsträger kontinuierlich derart bewegt wird,
daß er nacheinander die Gesamtfläche des Aufzeichnungsträgers aufzeichnungsträger-rasterbild-teilflächen-weise erfaßt und wobei der Lichtmodulator für jede Aufzeichnungsträger-Rasterbild-Teilfläche mit Licht beaufschlagt wird,
**dadurch gekennzeichnet,**
**daß** während der Relativ-Bewegung zwischen Lichtmodulator (3) und Aufzeichnungsträger (5) die Auslenkung der vom Lichtmodulator (3) ausgehenden auf eine Aufzeichnungsträger-Rasterbild-Teilfläche auftreffenden Lichtstrahlen auf dem Aufzeichnungsträger während einer Zeitdauer T durch eine zwischen Lichtmodulator (3) und Aufzeichnungsträger (5) angeordnete verschiebbare Linse (4) kompensiert (9) wird,
**daß** der Zeitraum T
über einem Wert W1 liegt, durch den der zulässige maximale Verschiebungsweg der Relativbewegung für das Auflösungsvermögen der Aufzeichnung ohne Verwendung der Linse (4) bestimmt ist und
unter einem Wert W2 für einen Zeitraum liegt,
deren Beginn beim projektiven Eintreten der ersten Hälfte der Lichtmodulatorfläche in die aktuelle Aufzeichnungsträger-Rasterbild-Teilfläche liegt und
deren Ende auftritt, wenn nur noch die zweite Hälfte der Lichtmodulatorfläche projektiv in dieser Aufzeichnungsträger-Rasterbild-Teilfläche liegt, verringert um eine Rücklaufzeit für die Linse (4),
und **daß** die Linse (4) nach Aufzeichnung der Bildelemente in einer Aufzeichnungsträger-Rasterbild-Teilfläche entgegen ihrer kompensierenden Verschieberichtung verschoben wird in eine Ausgangsposition für die Aufzeichnung der nachfolgenden Aufzeichnungsträger-Rasterbild-Teilfläche.

2. Verfahren nach Anspruch 1,
**gekennzeichnet durch** die Verwendung eines Kippspiegel-Elemente-Halbleiter-Chips als Lichtmodulator.

3. Verfahren nach Anspruch 1,
**gekennzeichnet durch** die Verwendung einer Flüssigkristallanordnung als Lichtmodulator.

4. Verfahren nach Anspruch 1,
**gekennzeichnet durch** die Verwendung einer magneto-optischen oder ferroelektrischen Anordnung als Lichtmodulator.

5. Verfahren nach einem der Ansprüche 1 bis 4,
**dadurch gekennzeichnet, daß** die Lichtqelle Dauerlicht aussendend ist.

6. Verfahren nach Anspruch 5,
**dadurch gekennzeichnet, daß** die Lichtquelle eine Quecksilber-Bogenlampe ist.

7. Verahren nach Anspruch 1 ,
**dadurch gekennzeichnet,**
**daß** das Aufzeichnungsträgermaterial vor der Aufzeichnung in einem flüssigen Zustand ist.

8. Verfahren nach Anspruch 1,
**dadurch gekennzeichnet, daß**
als Linse (4) ein abbildungsmaßstab bestimmendes Objektiv verwendet wird.

## Claims

1. A process for recording a raster image on a light-sensitive record carrier wherein a computer-stored raster image comprising raster points is converted into controllable raster point-related light beams by means of a light modulator,
by which the image elements corresponding to the raster points are plotted on the record carrier,
whereby the computer raster image is divided matrix-like into imaginary computer raster-image sub-areas,
the record-carrier raster image is divided matrix-like into imaginary record-carrier raster-image sub-areas,
the sub-areas of the computer raster image and record-carrier raster image are associated with one another,
the computer raster-image sub-areas are divided matrix-like into imaginary n raster-point positions and
the record-carrier raster-image sub-areas are divided matrix-like into imaginary n image-element positions,
the image-element positions are assigned to the raster-point positions,
the recording of the image elements of a record-carrier raster-image sub-area corresponding to the raster points takes place simultaneously,
and the recording of the record-carrier raster-image sub-areas takes place successively,
and in which the light modulator is moved continuously in relation to the record carrier in such a way
that it records progressively the entire surface of the record carrier sub-area by sub-area of the record-carrier raster-image,
and whereby the light modulator is illuminated for each record-carrier raster-image sub-area,
**characterised in that**
during the relative movement between light modulator (3) and record carrier (5), the deflection of the light beams emanating from the light modulator (3) and striking a record-carrier raster-image sub-area is compensated on the record carrier during a period T by a movable lens (4) located between the light modulator (3) and the record carrier (5), that the time interval T is greater than a value W1, by which the permissible maximum travel distance of the relative movement is determined for the resolution of the recording without using the lens, and
is less than a value W2 for a time interval,
which commences with the projective entry of the first half of the light-modulator surface into the current record-carrier raster-image sub-area, and
which ends when only the second half of the light-modulator surface is protectively within this record-carrier raster-image sub-area, reduced by period for the return of the lens (4),
and that the lens (4), after recording the image elements in a record-carrier raster-image sub-area is moved contrary to its compensating direction of travel into its starting position for recording the next record-carrier raster-image sub-area.

2. Process in accordance with claim 1,
**characterised by** the use of a tilting-mirror element semiconductor chip as light modulator.

3. Process in accordance with claim 1,
**characterised by** the use of a liquid-crystal arrangement as light modulator.

4. Process in accordance with claim 1,
**characterised by** the use of a magneto-optical or ferroelectric arrangement as light modulator.

5. Process in accordance with one of the claims 1 to 4,
**characterised in that** the light source emanates light continuously.

6. Process in accordance with claim 5,
**characterised in that** the light source is a mercury arc lamp.

7. Process in accordance with claim 1,
**characterised in that** the material of the record carrier is in the liquid state prior to recording.

8. Process in accordance with claim 1,
**characterised in that** a lens for adjusting the magnification is used as lens (4).

## Revendications

1. Procédé pour l'enregistrement d'une image à trame sur un support d'enregistrement photosensible, dans lequel une image à trame constituée de points de trame et mémorisée dans un ordinateur est transformée à l'aide d'un modulateur de lumière en rayons lumineux commandés relatifs aux points d'analyse de l'image tramée,
- les rayons lumineux servent à l'enregistrement sur le support des éléments d'image correspondants aux points de trame, et
- l'image tramée côté ordinateur est divisée sous forme d'une matrice en facettes virtuelles,
- l'image tramée côté support est divisée sous forme d'une matrice en facettes virtuelles,
- les facettes de l'image tramée côté ordinateur et côté support sont affectées l'une à l'autre,
- les facettes de l'image tramée côté ordinateur sont réparties sous forme d'une matrice en nombre n positions imaginaires des points de trame,
- et les facettes de l'image tramée côté support sont réparties sous forme d'une matrice en nombre n positions imaginaires des éléments d'image,
- les positions des éléments d'image sont affectées aux positions des points de trame
- et l'enregistrement des éléments d'image correspondants aux points de trame dans les facettes de l'image tramée côté support est exécuté de manière synchrone,
- l'enregistrement des facettes de l'image tramée côté support est exécuté successivement,
- le modulateur de lumière est déplacé par rapport au support d'enregistrement de manière continue afin d'assurer, en succession facette par facette, la couverture de la surface entière de l'image tramée côté support tout en exposant le modulateur de lumière à la lumière pour chaque facette de l' image tramée côté support, **caractérisé en ce que** pendant le mouvement relatif du modulateur de lumière (3) par rapport au support d'enregistrement (5) la déviation des rayons lumineux émis par le modulateur de lumière (3) et incidents sur une facette de l'image tramée côté support est compensée pendant une durée de temps T par une lentille amovible (4) disposée entre le modulateur de lumière et le support d'enregistrement (5),
cette durée de temps T dépasse une valeur W1 déterminant le déplacement maximum admissible du mouvement relatif assurant la résolution de l'enregistrement sans intervention de la lentille (4) et
est inférieure à une valeur W2 pour une durée de temps,
débutant à l'entrée en projection de la première moitié de la surface du modulateur dans la facette de l'image côté support sélectionnée et dont la fin a lieu lorsqu'il n'y a que la deuxième moitié de la surface du modulateur de lumière qui se trouve en projection dans cette facette de l'image tramée côté support, diminuée d'un temps de retour pour la lentille (4),
et que la lentille (4), après l'enregistrement des éléments d'image dans une facette de l'image à trame côté support est déplacée dans le sens opposé de sa direction de défilement compensateur pour être positionnée dans une position de départ pour l'enregistrement de la facette suivante côté support.

2. Procédé selon la revendication 1, **caractérisé par** l'emploi d'une puce semi-conductrice regroupant un oscillographe à miroirs (DMD) comme modulateur de lumière.

3. Procédé selon la revendication 1, **caractérisé par** l'emploi d'un système de cristaux liquides comme modulateur de lumière.

4. Procédé selon la revendication 1, **caractérisé par** l'emploi d'un système magnéto-optique ou ferroélectrique comme modulateur de lumière.

5. Procédé selon l'une des revendications 1 à 4, **caractérisé en ce que** la source de lumière permet l'éclairage continu.

6. Procédé selon la revendication 5, **caractérisé en ce que** la source de lumière est une lampe à arc à mercure.

7. Procédé selon la revendication 1, **caractérisé en ce que** la matière d'enregistrement avant l'enregistrement est à l'état liquide.

8. Procédé suivant la revendication 1, **caractérisé en ce que** la lentille (4) est un objectif déterminant l'échelle de reproduction.
